# FASCICULE DE BREVET EUROPEEN

(11) **EP 1 124 715 B1**
(45) Date de publication et mention de la délivrance du brevet: **03.09.2003**
(21) Numéro de dépôt: 99950825.2
(22) Date de dépôt: 26.10.1999
(51) Int. Cl.: B60T 13/57

(54) **SERVOMOTEUR PNEUMATIQUE A AUTO-ASSISTANCE UTILISANT UNE CLEF BASCULANTE**
UNTERDRUCKBREMSKRAFTVERSTÄRKER MIT AUTOMATISCHER UNTERSTÜTZUNG
PNEUMATIC SELF-ASSISTED SERVOMOTOR USING A FLIP SWITCH

(30) Priorité: 26.10.1998 FR 9813407
(43) Date de publication de la demande: 22.08.2001
(73) Titulaire: Bosch Systèmes de Freinage, 93700 Drancy (FR)
(72) Inventeur: LEVRAI, Roland, F-93240 Stains (FR); CASTELLO, Olivier, F-93140 Bondy (FR); RICHARD, Philippe, F-77500 Chelles (FR)
(74) Mandataire: Hurwic, Aleksander Wiktor
(86) Numéro de dépôt international: FR9902591
(87) Numéro de publication internationale: WO00024623

(56) Documents cités:
- WO-A-97/28032
- FR-A- 2 617 451

## Description

La présente invention concerne un servomoteur pneumatique d'assistance au freinage.

Plus précisément, l'invention concerne un servomoteur d'assistance au freinage comprenant : une enveloppe rigide; une cloison mobile délimitant, de façon étanche, une chambre avant et une chambre arrière à l'intérieur de l'enveloppe, la chambre avant étant en fonctionnement reliée en permanence à une première source de pression délivrant une première pression; un piston pneumatique se déplaçant avec la cloison mobile et présentant un moyeu monté coulissant dans une ouverture de l'enveloppe; une tige de commande mobile dans le moyeu entre une position de repos et une position d'actionnement extrême en fonction d'une résultante de forces qui agit sur elle et qui comprend une force d'entrée exercée suivant une direction axiale d'actionnement orientée vers la chambre avant, et une force de rappel principale exercée par un ressort principal suivant une direction axiale de retour, inverse de la direction axiale d'actionnement; un plongeur logé dans un alésage du moyeu et entraîné par la tige de commande; et un clapet à trois voies comprenant lui-même un siège fixe annulaire formé sur une périphérie interne du moyeu, un siège mobile annulaire, concentrique au siège fixe et porté par le plongeur, et un obturateur tubulaire, concentrique au plongeur et au moyeu, et présentant une face frontale annulaire d'obturation, cette face frontale coopérant sélectivement avec le siège mobile pour isoler la chambre arrière vis-à-vis d'une seconde source de pression délivrant une seconde pression supérieure à la première, et cette face frontale coopèrant sélectivement avec le siège fixe pour permettre à la chambre arrière d'être reliée à la seconde source de pression.

Des dispositifs de ce type sont bien connus dans l'art antérieur, tel qu'illustré par exemple par les documents de brevets US - 3 470 697, FR - 2 532 084, et FR - 2 658 466.

De récentes recherches ont montré que bon nombre de conducteurs, confrontés à une situation de freinage d'urgence, sous-estimaient les risques réellement encourus et, après avoir freiné brutalement, relâchaient leur effort de freinage dans des circonstances où le maintien d'un effort important était au contraire absolument indispensable pour éviter l'accident.

Ce constat a conduit au développement de solutions diverses tendant à pallier l'éventuel comportement défaillant d'un conducteur inexpérimenté ou saisi de panique.

L'invention se situe dans ce contexte et a pour but de proposer une solution simple au problème du maintien d'une force de freinage importante à la suite d'un coup de frein violent.

A cette fin, le servomoteur de l'invention, par ailleurs conforme à la définition qu'en donne le préambule ci-dessus, est essentiellement caractérisé en ce que le plongeur comprend un corps cylindrique solidaire de la tige de commande et une bague montée axialement coulissante par rapport au corps cylindrique entre des butées avant et arrière du corps, une section antérieure de la bague étant engagée entre le corps cylindrique et l'alésage du moyeu, une section postérieure de la bague formant une collerette sur laquelle est défini le siège mobile, et les butées avant et arrière étant séparées l'une de l'autre par une distance autorisant un débattement axial de la bague, en ce qu'un ressort secondaire exerce sur la collerette une force de rappel secondaire orientée suivant la direction axiale de retour et sollicitant la collerette en direction de la butée arrière, et en ce que la bague et le moyeu comportent des premiers et seconds moyens respectifs de retenue réversible propres à maintenir la bague fixe par rapport au moyeu en dépit de la force de rappel secondaire exercée sur la bague et à permettre corrélativement à la chambre arrière d'être reliée à la seconde source de pression, ces moyens de retenue étant activés par un enfoncement de la bague dans l'alésage sur une course au moins égale à une course minimale déterminée, et étant désactivés au moins sous condition d'un entraînement de la bague par la butée avant, se produisant lorsque cette butée avant se déplace suivant la direction axiale de retour sous l'effet de la force de rappel principale.

Dans un mode de réalisation préféré de l'invention, les moyens de retenue comprennent une clef basculante chevauchant la bague et un organe d'arrêt élastiquement escamotable relié au moyeu, cet organe d'arrêt interceptant la clef et lui appliquant une force de retenue déterminée lorsque ces moyens de retenue sont activés.

Cet organe d'arrêt élastiquement escamotable peut par exemple être constitué par un brin flexible d'un jonc élastique solidaire du moyeu.

Outre la clef basculante, les moyens de retenue peuvent aussi comprendre un électro-aimant solidaire du moyeu et sélectivement commandé pour retenir cette clef basculante après un enfoncement de la bague dans l'alésage sur une course au moins égale à la course minimale déterminée.

Pour réduire encore l'intensité de la force d'entrée résiduelle que le conducteur doit appliquer pour maintenir le servomoteur de l'invention dans son état d'actionnement après un freinage violent, il peut également être avantageux de prévoir que le plongeur comprenne un poussoir sélectivement animé d'un mouvement de coulissement par rapport au corps cylindrique, disposé devant le corps cylindrique dans la direction d'actionnement, et présentant un épaulement coopérant avec le moyeu pour limiter le mouvement de ce poussoir par rapport au moyeu suivant la direction axiale de retour, de prévoir que le corps cylindrique maintienne le poussoir dans une position avancée, suivant la direction d'actionnement, lorsque la tige de commande est dans sa position d'actionnement extrême, le corps cylindrique et le poussoir étant alors en contact axial l'un contre l'autre, et de prévoir que l'épaulement du poussoir coopère avec le moyeu pour faire cesser le contact axial du corps cylindrique et du poussoir lorsque la tige de commande retourne dans sa position de repos.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe d'un servomoteur conforme à l'invention;
- la Figure 2 est une vue en coupe du plongeur d'un servomoteur conforme à l'invention, observé au repos;
- la Figure 3 est une vue en coupe du plongeur d'un servomoteur conforme à l'invention, observé dans son mode de fonctionnement standard;
- la Figure 4 est une vue en perspective du plongeur et des organes associés d'un servomoteur conforme à l'invention, illustrant la clef basculante et le jonc élastique;
- la Figure 5 est une vue de face de la clef basculante associée à une vue en coupe du jonc élastique:

- la Figure 6 est une vue en coupe du piston pneumatique observé suivant l'incidence indiquée par les flèches 6-6 de la figure 3:

- la Figure 7 est une vue en coupe du piston pneumatique observé suivant l'incidence indiquée par les flèches 7-7 de la figure 6;
- la Figure 8 est une vue en coupe du plongeur d'un servomoteur conforme à l'invention, observé dans son mode de fonctionnement spécifique, cette vue représentant les moyens de retenue dans leur état activé;
- la Figure 9 est une vue en coupe du plongeur d'un servomoteur conforme à l'invention, observé dans son mode de fonctionnement spécifique, cette vue représentant les moyens de retenue dans leur état activé et en cours de coopération;
- la Figure 10 est une vue en coupe du plongeur d'un servomoteur conforme à l'invention, observé dans son mode de fonctionnement spécifique, cette vue représentant les moyens de retenue en cours de désactivation; et
- la Figure 11 est une vue en coupe du plongeur d'un servomoteur conforme à un second mode de réalisation de l'invention, cette vue représentant les moyens de retenue dans leur état activé et en cours de coopération.

Le servomoteur pneumatique d'assistance de l'invention comprend, de façon connue en soi, une coquille avant la et une coquille arrière 1b formant ensemble une enveloppe rigide 1.

Une cloison mobile 2 sépare de façon étanche l'intérieur de cette enveloppe rigide 1 et y délimite une chambre avant 3 et une chambre arrière 4, la chambre avant 3 étant en fonctionnement reliée à une première source de pression D qui délivre une première pression Pd, relativement basse.

Un piston pneumatique 5 se déplace avec la cloison mobile 2 et présente un moyeu 6 monté coulissant dans une ouverture 19 de l'enveloppe 1.

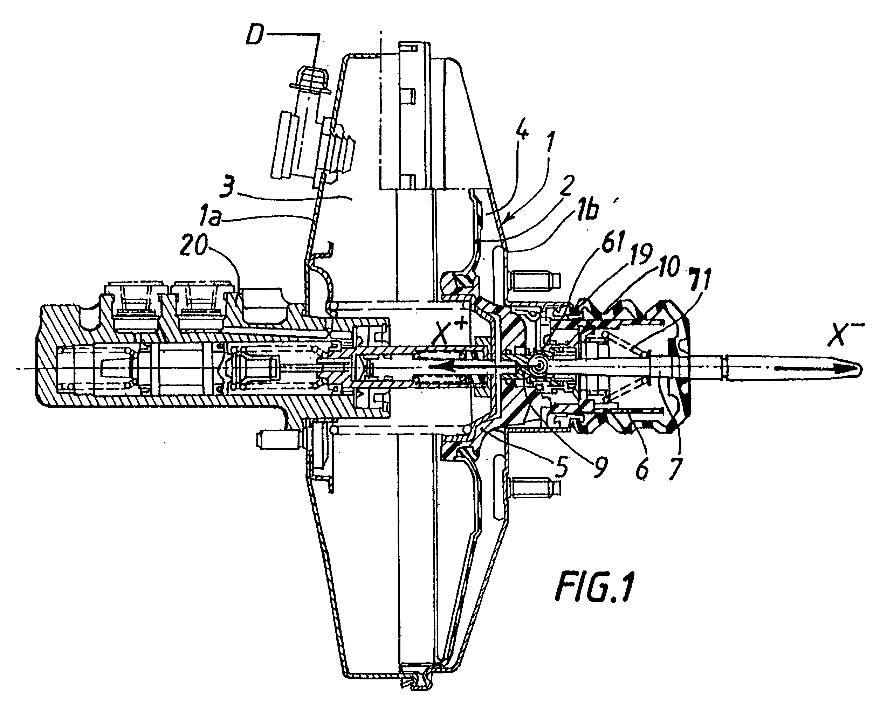

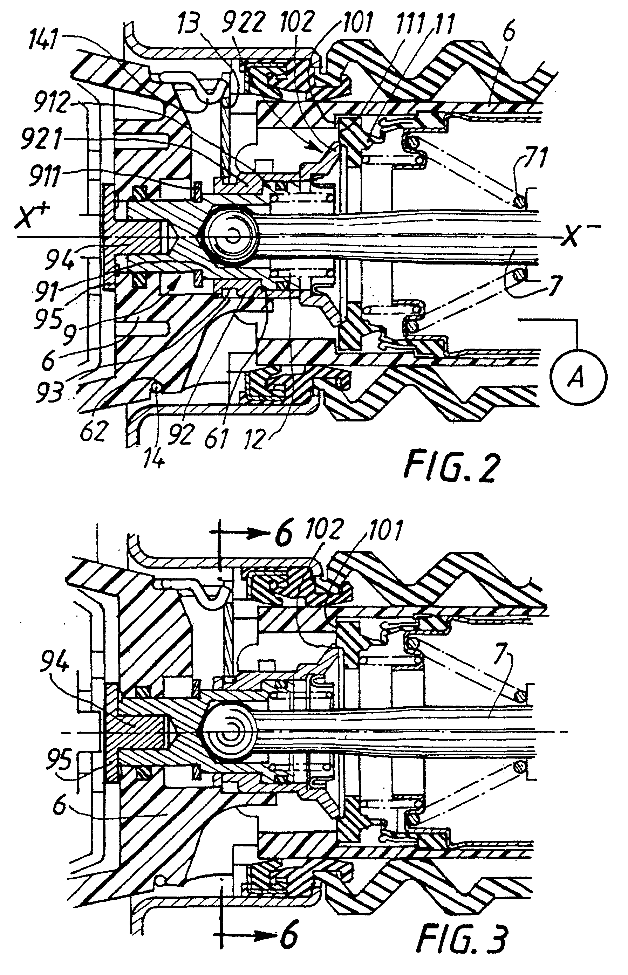

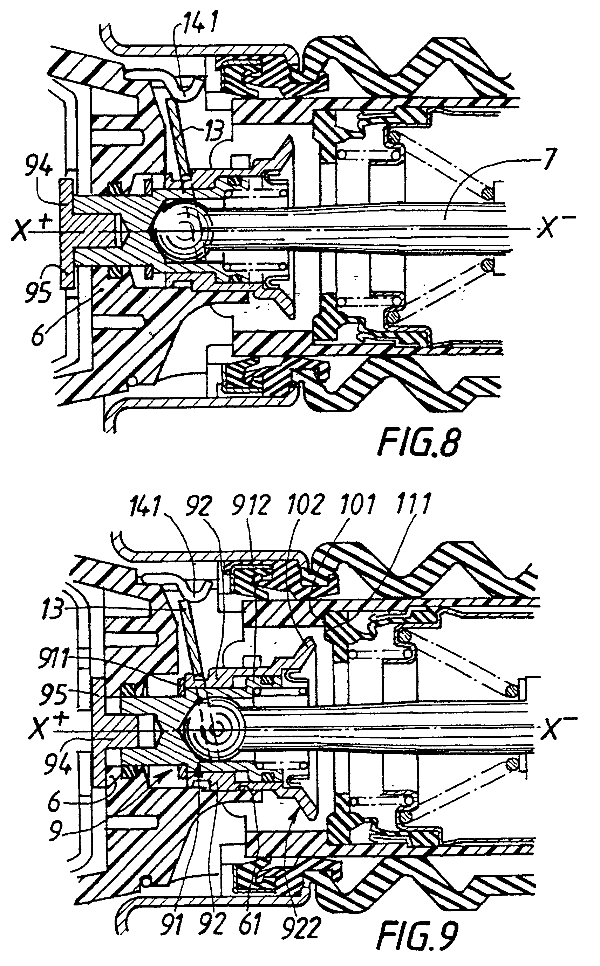

Le servomoteur est commandé par une tige de commande 7 mobile dans le moyeu 6 entre une position de repos (figures 1 et 2) et une position d'actionnement extrême (figure 8), la position de cette tige dépendant à la fois d'une force d'entrée Fe qui est appliquée sur cette tige, suivant une direction axiale d'actionnement X+, par la pédale de frein (non représentée), et d'une force de rappel Frp exercée dans la direction inverse X- par un ressort de rappel principal 71.

Un plongeur 9, entraîné par la tige de commande 7, est monté coulissant dans un alésage 61 du moyeu 6 pour contrôler l'état d'un clapet à trois voies 10.

Ce clapet 10 est essentiellement constitué (figures 2 et suivantes) d'un siège fixe annulaire 101 formé à la périphérie interne du moyeu 6, d'un siège mobile annulaire 102, qui est concentrique au siège fixe 101 et porté par le plongeur 9, et d'un obturateur tubulaire 11, qui est lui-même concentrique à la fois au plongeur et au moyeu.

L'obturateur tubulaire 11 présente une face frontale annulaire d'obturation 111 destinée à coopérer, en fonction de la position du plongeur 9, soit avec le siège mobile 102. soit avec le siège fixe 101.

Lorsque le servomoteur est au repos (figures 1 et 2), la face frontale 111 de l'obturateur 11 s'applique sur le siège mobile 102 et isole la chambre arrière 4 vis-à-vis d'une seconde source de pression A, en général constituée par l'atmosphère, et qui délivre une pression Pa supérieure à la pression Pd de la première source D.

En revanche, lorsqu'une force d'entrée Fe sensiblement supérieure à la force de rappel Frp du ressort 71 est exercée sur la tige 7, cette force Fe provoque un déplacement du plongeur 9 dans la direction d'actionnement X+, de sorte que la face frontale 111 de l'obturateur 11 se décolle du siège mobile 102 en s'appliquant sur le siège fixe 101 (figure 3), la chambre arrière 4 se trouvant alors reliée à la source de pression A,

L'admission d'air dans la chambre arrière repousse la cloison mobile 2 dans la direction d'actionnement X+ et engendre une force d'assistance utilisée pour actionner le maître-cylindre 20.

Selon l'invention, comme le montrent le mieux les figures 2 et suivantes, le plongeur 9 comprend un corps cylindrique 91, solidaire de la tige de commande 7, et une bague 92.

La bague 92 est montée axialement coulissante de façon étanche sur l'extérieur du corps cylindrique 91, entre une butée avant 911 et une butée arrière 912 toutes deux portées par le corps 91, ces butées avant 911 et arrière 912 étant séparées l'une de l'autre par une distance autorisant un débattement axial de la bague 92 sur le corps 91.

Une section antérieure 921 de la bague 92 est engagée dans l'espace annulaire qui sépare le corps cylindrique 91 de l'alésage 61 du moyeu, et remplit totalement cet espace suivant une direction radiale.

Une section postérieure 922 de la bague 92 est conformée en collerette et porte le siège mobile 102.

Un ressort de rappel secondaire 12 exerce sur la collerette 922 une force de rappel secondaire Frs orientée suivant la direction axiale de retour X- et sollicitant la collerette 922 en direction de la butée arrière 912.

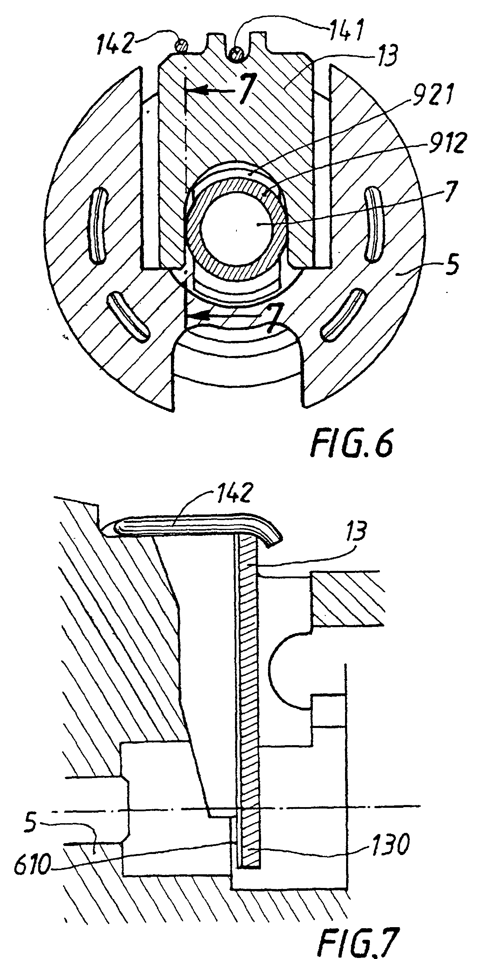

Une clef basculante 13 est engagée dans une rainure périphérique transversale 93 de la bague 92, de manière à chevaucher cette bague 92, à se déplacer avec elle suivant l'axe des directions X- et X+, et à pouvoir s'incliner par rapport au plan formé par la rainure 93, comme le montre une comparaison des figures 2 et 8, lorsque sa base 130 rencontre une butée 610 formée dans une encoche du moyeu 6 (voir figure 7).

Un organe d'arrêt élastiquement escamotable 141 est d'autre part relié au moyeu 6 pour intercepter la clef 13 lorsque la bague 92 est enfoncée dans l'alésage 61 sur une course supérieure à celle dont se déplace cette bague dans le cas d'un actionnement normal du servomoteur, illustré à la figure 3.

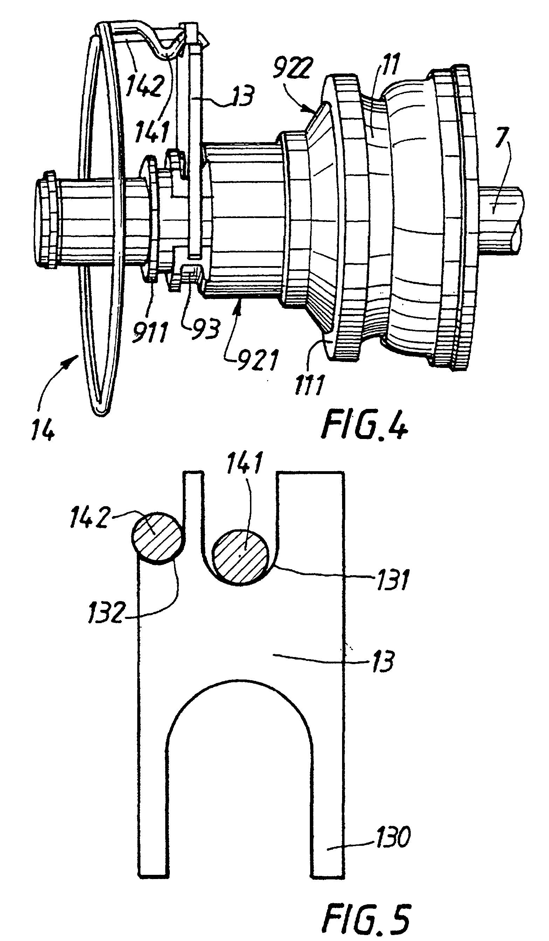

L'organe d'arrêt élastiquement escamotable 141 est par exemple constitué par un brin flexible formant une extrémité recourbée d'un jonc élastique 14, de forme essentiellement circulaire par ailleurs, engagé dans une rainure 62 du moyeu 6. Chacune des extrémités 141, 142 du jonc 14 est de préférence engagée dans une entaille correspondante 131, 132 de la clef 13 pour assurer un guidage optimal de ces extrémités (voir figure 5).

Ainsi, dans le cas, illustré à la figure 8, où le servomoteur est actionné de façon suffisamment brusque pour que la bague 92 s'enfonce dans l'alésage 61 sur une course supérieure à une course minimale déterminée C, la clef 13 s'engage dans l'organe d'arrêt 141, qui applique alors à la clef 13, donc à la bague 92, une force de retenue déterminée propre à maintenir la bague 92 fixe par rapport au moyeu 6 en dépit de la force de rappel secondaire Frs exercée par le ressort 12, et à permettre corrélativement à la chambre arrière 4 d'être reliée à la seconde source de pression A.

Dans ces conditions, le clapet 10 reste ouvert, même lorsque le conducteur relâche partiellement son effort de freinage, comme le montre la figure 9.

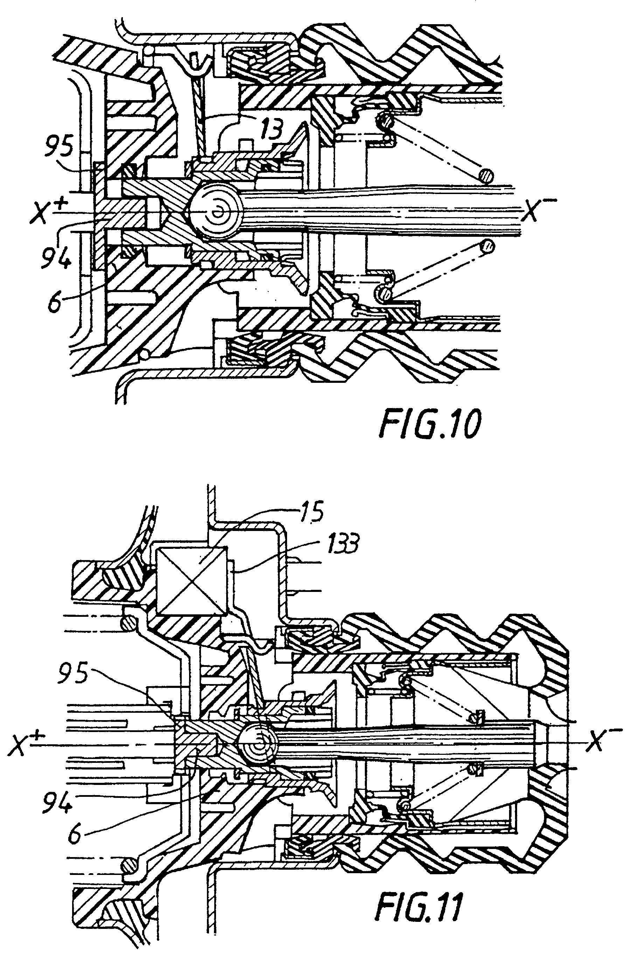

Pour ramener le servomoteur à son état de repos, la butée avant 911 doit se déplacer, sous l'effet de la force de rappel principale Frp exercée par le ressort 71, et entraîner la bague 92 suivant la direction axiale de retour X-, ce qui suppose que le conducteur réduise son effort de freinage jusqu'au point où la force de rappel principale Frp et la force de rappel secondaire Frs parviennent ensemble à vaincre la force d'entrée Fe et la force de retenue exercée par l'organe d'arrêt 141 sur la clef 13, cette dernière se désengageant alors de l'organe d'arrêt comme le montre la figure 10.

La figure 11 illustre un mode de réalisation de l'invention grâce auquel il est possible, après un actionnement brusque du servomoteur, de maintenir ouvert le clapet 10, même si le conducteur relâche intégralement son effort de freinage.

A cette fin, le servomoteur conforme à ce mode de réalisation comprend, outre la clef basculante 13 et éventuellement l'organe d'arrêt 141, un électro-aimant 15 qui est solidaire du moyeu 6 et qui est sélectivement commandé pour appliquer à la clef basculante une force de retenue capable à elle seule, ou assistée de la force de retenue exercée par l'organe d'arrêt 141, de maintenir la bague 92 dans une position d'actionnement, comme illustré à la figure 11.

Comme le montre en outre cette figure, la clef 13 est alors de préférence pourvue d'un prolongement 133 par lequel elle peut être attirée par l'électro-aimant 15.

Les figures 2, 3 et 8 à 11 illustrent par ailleurs des caractéristiques supplémentaires qui permettent de réduire encore la valeur de la force d'entrée résiduelle que le conducteur doit appliquer pour maintenir le servomoteur de l'invention dans son état d'actionnement après un freinage intense.

A cette fin, le plongeur 9 comprend un poussoir 94 qui est monté coulissant par rapport au corps cylindrique 91 et qui est disposé devant ce dernier dans la direction d'actionnement X+.

Lorsque la tige de commande 7 est dans sa position de repos (figure 2), le corps cylindrique 91 et le poussoir 94 ne sont pas axialement en contact l'un contre l'autre, autrement dit, sont axialement distants l'un de l'autre.

Le poussoir 94 présente un épaulement 95 susceptible de venir en butée arrière sur le moyeu 6 pour limiter le mouvement de ce poussoir 94 par rapport au moyeu 6 suivant la direction axiale de retour X-.

Lorsque la tige de commande 7 est dans sa position d'actionnement extrême (figure 8), le corps cylindrique 91 maintient le poussoir 94 dans une position avancée, suivant la direction d'actionnement X+, le corps cylindrique 91 et le poussoir 94 étant alors en contact axial l'un contre l'autre, et l'épaulement 95 du poussoir étant décollé du moyeu 6.

En revanche, lorsque la tige de commande 7 revient dans sa position de repos après un actionnement brusque, (figure 9), l'épaulement 95 du poussoir 94 coopère à nouveau avec le moyeu 6 pour faire cesser le contact axial du corps cylindrique 91 et du poussoir 94.

De cette façon, les forces de réaction, qui sont appliquées au poussoir 94 suivant la direction de retour X-, ne sont pas transmises à la tige de commande 7, de sorte que le maintien de cette tige dans la position, telle qu'illustrée à la figure 9, pour laquelle le servomoteur reste actionné, n'exige qu'un effort très faible de la part du conducteur.

## Revendications

1. Servomoteur pneumatique d'assistance au freinage comprenant : une enveloppe rigide (1): une cloison mobile (2) délimitant, de façon étanche, une chambre avant (3) et une chambre arrière (4) à l'intérieur de l'enveloppe (1), la chambre avant (3) étant en fonctionnement reliée en permanence à une première source de pression (D) délivrant une première pression (Pd): un piston pneumatique (5) se déplaçant avec la cloison mobile (2) et présentant un moyeu (6) monté coulissant dans une ouverture (19) de l'enveloppe (1); une tige de commande (7) mobile dans le moyeu (6) entre une position de repos et une position d'actionnement extrême en fonction d'une résultante de forces qui agit sur elle et qui comprend une force d'entrée (Fe) exercée suivant une direction axiale d'actionnement (X+) orientée vers la chambre avant (3), et une force de rappel principale (Frp) exercée par un ressort principal (71) suivant une direction axiale de retour (X-), inverse de la direction axiale d'actionnement (X+); un plongeur (9) logé dans un alésage (61) du moyeu (6) et entraîné par la tige de commande; et un clapet à trois voies (10) comprenant lui-même un siège fixe annulaire (101) formé sur une périphérie interne du moyeu (6), un siège mobile annulaire (102), concentrique au siège fixe (101) et porté par le plongeur (9), et un obturateur tubulaire (11), concentrique au plongeur et au moyeu, et présentant une face frontale annulaire d'obturation (111), cette face frontale (111) coopérant sélectivement avec le siège mobile (102) pour isoler la chambre arrière (4) vis-à-vis d'une seconde source de pression (A) délivrant une seconde pression (Pa) supérieure à la première (Pd), et cette face frontale (111) coopèrant sélectivement avec le siège fixe (101) pour permettre à la chambre arrière (4) d'être reliée à la seconde source de pression (A), **caractérisé en ce que** le plongeur (9) comprend un corps cylindrique (91) solidaire de la tige de commande (7) et une bague (92) montée axialement coulissante par rapport au corps cylindrique (91) entre des butées avant (911) et arrière (912) du corps, une section antérieure (921) de la bague (92) étant engagée entre le corps cylindrique (91) et l'alésage (61) du moyeu, une section postérieure (922) de la bague (92) formant une collerette sur laquelle est défini le siège mobile (102), et les butées avant (911) et arrière (912) étant séparées l'une de l'autre par une distance autorisant un débattement axial de la bague (92), **en ce qu'**un ressort secondaire (12) exerce sur la collerette (922) une force de rappel secondaire (Frs) orientée suivant la direction axiale de retour (X-) et sollicitant la collerette (922) en direction de la butée arrière (912), et **en ce que** la bague (92) et le moyeu (6) comportent des premiers et seconds moyens respectifs (13, 141, 15) de retenue réversible propres à maintenir la bague (92) fixe par rapport au moyeu (6) en dépit de la force de rappel secondaire (Frs) exercée sur la bague et à permettre corrélativement à la chambre arrière (4) d'être reliée à la seconde source de pression (A), ces moyens de retenue étant activés par un enfoncement de la bague dans l'alésage (61) sur une course au moins égale à une course minimale déterminée (C), et étant désactivés au moins sous condition d'un entraînement de la bague (92) par la butée avant (911), se produisant lorsque cette butée avant se déplace suivant la direction axiale de retour (X-) sous l'effet de la force de rappel principale (Frp).

2. Servomoteur suivant la revendication 1, **caractérisé en ce que** les moyens de retenue (13, 141, 15) comprennent une clef basculante (13) chevauchant la bague (92) et un organe d'arrêt élastiquement escamotable (141) relié au moyeu (6), cet organe d'arrêt interceptant la clef (13) et lui appliquant une force de retenue déterminée lorsque ces moyens de retenue sont activés.

3. Servomoteur suivant la revendication 2, **caractérisé en ce que** l'organe d'arrêt élastiquement escamotable (141) est constitué par un brin flexible d'un jonc élastique (14) solidaire du moyeu (6).

4. Servomoteur suivant l'une quelconque des revendications précédentes, **caractérisé en ce que** les moyens de retenue (13, 141, 15) comprennent une clef basculante (13) chevauchant la bague (92) et un électro-aimant (15) solidaire du moyeu (6) et sélectivement commandé pour retenir la clef basculante après un enfoncement de la bague (92) dans l'alésage (61) sur une course au moins égale à la course minimale déterminée (C).

5. Servomoteur suivant l'une quelconque des revendications précédentes, **caractérisé en ce que** le plongeur (9) comprend un poussoir (94) sélectivement animé d'un mouvement de coulissement par rapport au corps cylindrique (91), disposé devant le corps cylindrique (91) dans la direction d'actionnement (X+), et présentant un épaulement (95) coopérant avec le moyeu (6) pour limiter le mouvement de ce poussoir (94) par rapport au moyeu (6) suivant la direction axiale de retour (X-), **en ce que** le corps cylindrique (91) maintient le poussoir (94) dans une position avancée, suivant la direction d'actionnement (X+), lorsque la tige de commande (7) est dans sa position d'actionnement extrême, le corps cylindrique (91) et le poussoir (94) étant alors en contact axial l'un contre l'autre, et **en ce que** l'épaulement (95) du poussoir coopère avec le moyeu (6) pour faire cesser le contact axial du corps cylindrique (91) et du poussoir (94) lorsque la tige de commande (7) retourne dans sa position de repos.

## Patentansprüche

1. Pneumatischer Bremskraftverstärker, der folgendes aufweist: eine starres Gehäuse (1); eine bewegliche Trennwand (2), die auf dichte Weise eine vordere Kammer (3) und eine hintere Kammer (4) im Inneren des Gehäuses (1) begrenzt, wobei die vordere Kammer (3) im Betrieb ständig mit einer ersten Druckquelle (D) verbunden ist, die einen ersten Druck (Pd) abgibt; einen pneumatischen Kolben (5), der sich mit der beweglichen Trennwand (2) verschiebt und eine Nabe (6) aufweist, die gleitend in einer Öffnung (19) des Gehäuses (1) angebracht ist; eine Steuerstange (7), die in der Nabe (6) zwischen einer Ruheposition und einer extremen Betätigungsposition in Abhängigkeit von einer Resultierenden von Kräften beweglich ist, die auf sie wirkt und die eine Eingangskraft (Fe) aufweist, die entlang einer axialen Betätigungsrichtung (X⁺) ausgeübt wird, die zu der vorderen Kammer (3) gerichtet ist, und eine Hauptrückstellkraft (Frp), die von einer Hauptfeder (71) entlang einer axialen Rückkehrrichtung (X-) umgekehrt zu der axialen Betätigungsrichtung (X+) ausgeübt wird; einen Tauchkolben (9), der in einer Bohrung (61) der Nabe (6) aufgenommen ist und von der Steuerstange mitgenommen wird; und ein Dreiwegeventil (10), das seinerseits einen festgelegten ringförmigen Sitz (101), der an einem inneren Umfang der Nabe (6) ausgebildet ist, einen beweglichen ringförmigen Sitz (102), der zu dem festgelegten Sitz (101) konzentrisch ist und von dem Tauchkolben (9) gehalten wird, und eine rohrformige Verschlußeinrichtung (11) aufweist, die zu dem Tauchkoben und der Nabe konzentrisch ist und eine ringförmige Verschlußvorderseite (111) aufweist, wobei diese Vorderseite (111) selektiv mit dem beweglichen Sitz (102) zusammenwirkt, um die hintere Kammer (4) gegenüber einer zweiten Druckquelle (A) zu isolieren, die einen zweiten Druck (Pa) abgibt, der größer ist als der erste Druck (Pd), und wobei diese Vorderseite (111) selektiv mit dem festgelegten Sitz (101) zusammenwirkt, um zu ermöglichen, daß die hintere Kammer (4) mit der zweiten Druckquelle (A) verbunden wird, **dadurch gekennzeichnet, daß** der Tauchkolben (9) einen zylindrischen Körper (91), der mit der Steuerstange (7) fest verbunden ist, und einen Ring (92) aufweist, der bezüglich des zylindrischen Körpers (91) zwischen einem vorderen Anschlag (911) und einem hinteren Anschlag (912) des Körpers axial gleitend angebracht ist, wobei ein vorderer Abschnitt (921) des Rings (92) zwischen dem zylindrischen Körper (91) und der Bohrung (61) der Nabe eingreift, wobei ein hinterer Abschnitt (922) des Rings (92) einen Kragen bildet an dem der bewegliche Sitz (102) gebildet ist, und wobei der vordere Anschlag (91) und der hintere Anschlag (912) durch einen Abstand voneinander getrennt sind, der einen axialen Ausschlag des Rings (92) zuläßt, daß eine Sekundärfeder (12) auf den Kragen (922) eine Sekundärrückstellkraft (Frs) ausübt, die entlang der axialen Rückkehrichtung (X-) gerichtet ist und den Kragen (922) in Richtung des hinteren Anschlags (912) beaufschlagt, und **daß** der Ring (92) und die Nabe (6) erste bzw. zweite Mittel (13, 141, 15) zum reversiblen Zurückhalten aufweisen, die dazu geeignet sind, den Ring (92) bezüglich der Nabe (6) trotz der Sekundärrückstellkraft (Frs) zurückzuhalten, die auf den Ring ausgeübt wird, und zu ermöglichen, daß die hintere Kammer (4) korrelativ mit der zweiten Druckquelle (A) verbunden wird, wobei diese Rückhaltemittel durch ein Eindrücken des Rings in die Bohrung (61) über einen Hub aktiviert werden, der wenigstens gleich einem bestimmten minimalen Hub (C) ist, und wenigstens unter der Bedingung eines Mitnehmens des Rings (92) durch den vorderen Anschlag (911) desaktiviert werden, wozu es kommt, wenn sich dieser vordere Anschlag unter der Wirkung der Hauptrückstellkraft (Frp) nach der axialen Rückkehrrichtung (X-) verschiebt.

2. Verstärker nach Anspruch 1, **dadurch gekennzeichnet, daß** die Rückhaltemittel (13, 141, 15) einen Kippschlüssel (13), der den Ring (92) überlappt, und ein elastisch einklappbares, mit der Nabe (6) verbundenes Arretierungsorgan (141) aufweisen, wobei dieses Arretierungsorgan den Schlüssel (13) abfängt und darauf eine bestimmte Rückhaltekraft aufbringt, wenn diese Rückhaltemittel aktiviert sind.

3. Verstärker nach Anspruch 2, **dadurch gekennzeichnet, daß** das elastisch einklappbares Arretierungsorgan (141) durch einen flexiblen Draht eines elastischen Rings (14) gebildet ist, der mit der Nabe (6) fest verbunden ist.

4. Verstärker nach einem der vorhergehenden Ansprüche, **dadurch gekennzeichnet, daß** die Rückhaltemittel (13, 141, 15) einen Kippschlüssel (13), der den Ring (92) überlappt, und einen Elektromagneten (15) aufweisen, der mit der Nabe (6) fest verbunden ist und selektiv gesteuert wird, um den Kippschlüssel nach einem Eindrücken des Rings (92) in die Bohrung (61) über einen Hub zurückzuhalten, der wenigstens gleich dem bestimmten minimalen Hub (C) ist.

5. Verstärker nach einem der vorhergehenden Ansprüche, **dadurch gekennzeichnet, daß** der Tauchkolben (9) eine Schubstange (94) aufweist, die selektiv mit einer Gleitbewegung bezüglich des zylindrischen Körpers (91) angeregt wird, vor dem zylindrischen Körper (91) in Betätigungsrichtung (X+) angeordnet ist und eine Schulter (95) aufweist, die mit der Nabe (6) zusammenwirkt, um die Bewegung dieser Schubstange (94) bezüglich der Nabe (6) nach der axialen Rückkehrrichtung (X-) zu begrenzen, und **daß** der zylindrische Körper (91) die Schubstange (94) in einer vorgeschobenen Position entlang der Betätigungsrichtung (X+) hält, wenn sich die Steuerstange in ihrer extremen Betätigungsposition befindet, wobei der zylindrische Körper (91) und die Schubstange (94) dann gegeneinander in axialem Kontakt stehen, und **daß** die Schulter (95) der Schubstange mit der Nabe (6) zusammenwirkt, um den axialen Kontakt des zylindrischen Körpers (91) und der Schubstange (94) zu beenden, wenn die Steuerstange (7) in ihre Ruheposition zurückkehrt.

## Claims

1. Pneumatic brake-booster comprising: a rigid casing (1); a moving partition (2) delimiting, in a sealed way, a front chamber (3) and a rear chamber (4) inside the casing (1), the front chamber (3) in operation being permanently connected to a first source of pressure (D) delivering a first pressure (Pd); a pneumatic piston (5) moving with the moving partition (2) and having a hub (6) mounted to slide in an opening (19) of the casing (1); an operating rod (7) that can move in the hub (6) between a position of rest and an extreme actuating position as a function of a resultant of forces which acts on .it and which comprises an input force (Fe) exerted in an axial actuating direction (X+) directed towards the front chamber (3), and a main return force (Frp) exerted by a main spring (71) in an axial return direction (X-) that is the opposite of the axial actuating direction (X+); a plunger (9) housed in a bore (61) of the hub (6) and carried along by the operating rod; and a three-way valve (10) itself comprising a stationary annular seat (101) formed at an internal periphery of the hub (6), a moving annular seat (102), concentric with the stationary seat (101) and borne by the plunger (9) and a tubular shutter (11) concentric with the plunger and with the hub and having an annular front shut-off face (111), this front face (111) co-operating selectively with the moving seat (102) so as to isolate the rear chamber (4) from a second source of pressure (A) delivering a second pressure (Pa) higher than the first (Pd), and this front face (111) co-operating selectively with the stationary seat (101) so as to allow the rear chamber (4) to be connected to the second source of pressure (A), **characterized in that** the plunger (9) comprises a cylindrical body (91) secured to the operating rod (7) and a ring (92) mounted to slide axially with respect to the cylindrical body (91) between front (911) and rear (912) stops of the body, a front section (921) of the ring (92) being engaged between the cylindrical body (91) and the bore (61) of the hub, a rear section (922) of the ring (92) forming a collar on which the moving seat (102) is defined, and the front (911) and rear (912) stops being separated from one another by a distance that allows the ring (92) an axial excursion, **in that** a secondary spring (12) exerts on the collar (922) a secondary return force (Frs) directed in the axial return direction (X-) and urging the collar (922) towards the rear stop (912), and **in that** the ring (92) and the hub (6) comprise respective first and second reversible retaining means (13, 141, 15) capable of keeping the ring (92) stationary with respect to the hub (6) in spite of the secondary return force (Frs) exerted on the ring and correspondingly of allowing the rear chamber (4) to be connected to the second source of pressure (A), these retaining means being activated by the ring being driven into the bore (61) over a travel that is at least equal to a determined minimum travel (C), and being deactivated at least on the condition that the ring (92) is driven along by the front stop (911) when this front stop moves in the axial return direction (X-) under the effect of the main return force (Frp).

2. Booster according to Claim 1, **characterized in that** the retaining means (13, 141, 15) comprise a pivoting key (13) straddling the ring (92) and an elastically retractable stop member (141) connected to the hub (6), this stop member intercepting the key (13) and applying a determined retaining force to it when these retaining means are activated.

3. Booster according to Claim 2, **characterized in that** the elastically retractable stop member (141) consists of a flexible strand of an elastic snap ring (14) secured to the hub (6).

4. Booster according to any one of the preceding claims, **characterized in that** the retaining means (13, 141, 15) comprise a pivoting key (13) straddling the ring (92) and an electromagnet (15) secured to the hub (6) and selectively operated in such a way as to retain the pivoting key once the ring (92) has been driven into the bore (61) over a travel at least equal to the determined minimum travel (C).

5. Booster according to any one of the preceding claims, **characterized in that** the plunger (9) comprises a push-rod (94) selectively given a sliding movement with respect to the cylindrical body (91), arranged in front of the cylindrical body (91) in the actuating direction (X+), and having a shoulder (95) co-operating with the hub (6) to limit the movement of this push-rod (94) with respect to the hub (6) in the axial return direction (X-), **in that** the cylindrical body (91) keeps the push-rod (94) in a forwards position, in the actuating direction (X+), when the operating rod (7) is in its extreme actuating position, the cylindrical body (91) and the push-rod (94) then being in axial contact one against the other, and **in that** the shoulder (95) of the push-rod co-operates with the hub (6) to cause the axial contact between the cylindrical body (91) and the push-rod (94) to cease when the operating rod (7) returns to its position of rest.
